# EUROPEAN PATENT APPLICATION

(11) **EP 4 517 573 A1**
(43) Date of publication of application: **05.03.2025**
(21) Application number: 24190967.0
(22) Date of filing: 25.07.2024
(51) Int. Cl.: G06F 21/57, H04L 9/40

(54) **COMPUTER-IMPLEMENTED METHOD AND SYSTEM FOR MITIGATING SIMULATED CYBERATTACKS**

(30) Priority: 29.08.2023 LU 505014
(71) Applicant: Digisquad S.à.r.l., 6182 Gonderange Junglinster (LU)
(72) Inventor: Collas, Benjamin, Arlon (BE)
(74) Representative: Buchkremer, Mathieu

(57) **Abstract**

The invention provides a computer-implemented method for mitigating simulated cyberattacks, carried out by one or more user devices (1000) comprising an interface module (1150), the method comprising the steps of activating (S01) a functional module (1100) of the interface module (1150), sending (S11), from the functional module (1100), to a cyberattack simulation module (1500), a trigger input message (M1), generating with and sending from (S21) the cyberattack simulation module (1500), to the interface module (1150), a triggerable attack message (M2) based on the trigger input message (M1), replying (S31) to the triggerable attack message (M2), with the interface module (1150), by selecting a defense parameter, the defense parameter being sent (S41) to the cyberattack simulation module (1500) inside a defense message (M4), and computing (S51), with the cyberattack simulation module (1500), a cyber-defense score of the user devices (1000) based on the defense parameter.

## Description

### Technical Field

The present invention pertains to a method and system for mitigating cybersecurity risks. In particular, the present invention relates to methods and systems for simulating cyber-attacks on user devices, thereby adaptively increasing the security of electronic devices, such as computers and smartphones, against cyberattacks.

### Background Art

Despite the growing number of security systems and countermeasures already in place on computer and handheld systems to prevent cyberattacks, the number of security incidents and data breaches keeps increasing year after year, both in the private sphere and in companies across a wide range of industries. Most incidents, whether elaborate or not, very often start because of carelessness on the part of an individual user, or because of insufficient safeguards on electronic devices when they are using applications connected to a network.

With the growing concern about the ability of artificial intelligence-powered software to bypass current cybersecurity technologies, information technology experts need even more performing firewalls, antiviruses, web filters and authentication mechanisms to avoid their malicious consequences. In Europe alone for the year 2015, it was estimated that the number of economic losses due to cyberattacks, which include hacking, phishing, Denial-of-Service (DoS) attacks, insider threats, and web-based attacks, was as high as 1.6% of the GDP in some countries.

Faced with this problem, different solutions have been provided, such as implementing comprehensive training programs which aim to instill among users an understanding of the types of schemes employed in cyberattacks such as malware and phishing schemes, inform about best practices in cybersecurity, and impart knowledge on information technology and regulatory compliance. Such educational approaches have proved effective in reducing cybersecurity breaches that occur due to a lack of security awareness. For instance, US patent application No. 2014/0199663 A1 discusses context-aware cybersecurity training systems for providing cybersecurity training to a user based on his/her actions, these systems having largely demonstrated the benefits of developing further these practices.

However, the known methods and systems have several disadvantages which need to be remedied for upcoming applications, especially with the growing importance of artificial intelligence for creating fake albeit realistic information.

One of these disadvantages is the lack of real-time adaptation and response. Cybersecurity threats are continually evolving, with attackers developing new techniques and exploiting newly discovered vulnerabilities, relying more and more on machine learning and social engineering. Traditional and static security training methods may not effectively address these ever-changing threats. To be adequately prepared, users need training that can dynamically update and adapt to the current threat landscape.

Furthermore, the existing methods and systems also have the disadvantage that they often place an excessive burden on users, expecting them to remember complex passwords, avoid sophisticated phishing attacks, and always follow correct procedures. Human error is a leading cause of successful cyberattacks and better algorithms and systems are therefore needed for mitigating cyberattacks, simulated or not.

Therefore, there is a need for more efficient systems and methods, involving trainings and/or algorithmic improvements, for dynamically adapting security measures and tackling the ever-changing cyberthreat landscape.

### Summary of the Invention

An object of the invention is to provide a computer-implemented method and system that dynamically adapt cybersecurity training to individual needs and current threats, overcoming the one-size-fits-all limitation of conventional approaches. It aims to leverage real-time user data such as activity and behavior patterns, along with contextual attributes, to identify personalized training requirements and tailors the training content accordingly.

Another object is to provide a proactive and self-learning computer system that ensures training materials are consistently updated to align with rapidly evolving attack techniques. By leveraging the advanced processing power and data analysis capabilities of computing devices, including machine-learning and artificial intelligence methods, the invention aims at delivering cyber-defense systems that reinforces organizational defense measures against phishing attacks and other emerging cyber threats.

The above-mentioned objects are achieved by the present disclosure that, in a first aspect, provides a computer-implemented method carried out by at least one user device comprising an interface module, the method comprising the steps of:
a) preliminarily activating a functional module of the interface module,
b) sending, from the functional module, to a cyberattack simulation module, a trigger input message which comprises an identification parameter of the at least one user device,
c) upon receipt of the trigger input message by the cyberattack simulation module, generating with and sending from the cyberattack simulation module, to the interface module, a triggerable attack message based on the trigger input message,
d) upon receipt of the triggerable attack message by the interface module, replying to the triggerable attack message, with the interface module of the at least one user device, the step of replying comprising selecting a defense parameter, the defense parameter being subsequently sent by the interface module inside a defense message to the cyberattack simulation module, and
e) upon receipt of the defense message by the cyberattack simulation module, computing, with the cyberattack simulation module, a cyber-defense score of the at least one user device based on the defense parameter comprised in the defense message.

The present invention and computer-implemented method aims at providing a cyber-range, i.e., a virtual simulation environment designed for cybersecurity training, in analogy with a virtual shooting range dedicated to train human shooters, firearms and other devices in improving their accuracy. While conventional cyber-ranges may cater to human users, a distinct objective of the present invention is to train computer-implemented systems, thereby enabling an enhancement of their hardware and software defense, i.e., cyber-defense, capabilities specific to such environments. The invention ensures a secure space for cybersecurity professionals to hone their defense skills against cyber threats without endangering real systems and data. The cyber-range(s) provided by the present invention is or are also designed for direct operation by IT devices, such as computer-implemented systems run by corporate entities, government bodies, military institutions, and educational establishments, aiming to bolster both human skills and computer capacities in cybersecurity.

The provided computer-implemented method defines a cyber-range enabling the improvement of defenses against the pervasive cybersecurity challenge posed by phishing attacks, which exploit human vulnerabilities through deceptive techniques to gain unauthorized access to sensitive information. Email phishing, for instance involves fraudulent attempts to obtain confidential data by masquerading as trustworthy entities. Despite organizations implementing security controls and anti-phishing mechanisms, attackers constantly devise new techniques, making it difficult to protect against zero-day attacks.

The present invention enables an adaptive training system that overcomes the limitations of conventional approaches. Specifically, it integrates real-time user data, such as activity and behavior patterns, with contextual attributes to identify personalized training needs. Instead of relying solely on static information, the system further analyzes factors such as email interactions, browsing habits, and response patterns. Based on this analysis, the system identifies users and user devices that may require additional training and cyber-defenses when receiving phishing emails and other types of malicious cyberattacks. Real-time feedback is provided to enhance awareness and response capabilities.

Moreover, the adaptive training system ensures that the training materials are constantly updated to align with the rapidly evolving phishing techniques employed by attackers. This proactive approach enables organizations to address emerging threats promptly by deploying tailored training modules and reinforcing security measures.

By leveraging the known technical features of computers, including their processing power and data analysis capabilities, the present invention maximizes the potential of advanced computing devices, leveraging real-time user data to provide personalized and up-to-date training experiences.

In summary, the invention provides a cyber-range, which itself is a sophisticated virtual environment, facilitating the emulation of simulated networks, servers, workstations, mobile devices, and various threat vectors, thereby granting users the capability to comprehend attack dynamics, assess system resilience against multifaceted threats, conduct rigorous training on security incidents, evaluate cybersecurity expertise, engage in capture-the-flag and ethical hacking endeavors, test emerging security solutions prior to real-world integration, simulate cyberwarfare defenses against mock adversaries, execute incident response strategies, undertake thorough vulnerability assessments, apply digital forensic techniques for post-event analysis, and practice disaster recovery protocols in response to significant operational disruptions such as server failures or data breaches.

In possible embodiments, the identification parameter of the at least one user device is selected from the group comprising a MAC (Media Access Control) address, an IP (Internet Protocol) address, a device ID, a user ID, a user ID, a password, an email address, biometric data, a social security number, a bank card number and a combination thereof.

In possible embodiments, the cyberattack simulation module is comprised in the at least one user device.

In possible embodiments, the cyberattack simulation module comprises a cyberattack simulation generator and a memory, the trigger input message configured to be received by the cyberattack simulation generator, the triggerable attack message can be generated with and sent from the cyberattack simulation generator, the defense message is sent to and received by the cyberattack simulation generator.

In possible embodiments, a single interface module is used across all of the user devices. In another embodiment, each of the at least one user device comprises its own functional module and its own corresponding interface module.

In possible embodiments, the interface module is selected from the group consisting of a machine-to-machine, M2M, interface and a human-to-machine, H2M, interface.

Herein, the functional module enables transparent communication between the user device and client applications as well as between the client applications and the simulation module.

In possible embodiments, the at least one user device comprises a navigation computer-implemented system. Said navigation computer-implemented system is configured to enable a cyber-range, i.e., a virtual simulation environment designed for cybersecurity training. Herein, the navigation computer-implemented system is any type of computer, tablet or smartphone and preferably comprises a graphical user interface, or "GUI", and a processing unit. Herein, the GUI provides user interaction and display capabilities, and the processing unit is configured to execute instructions. The processing unit is further configured to receive and interpret Hypertext Markup Language, i.e., HTML, documents, render web pages, retrieve and display multimedia content, manage cookies, execute JavaScript code, and provide secure communication protocols for accessing and navigating a network similarly to the Internet" Herein, the browser can be on a computer or on a smartphone.

In possible embodiments, the cyberattack simulation module is part of the at least one user device. In other embodiments, the cyberattack simulation module is comprised in a server connected to the at least one user device.

In possible embodiments, the cyber-defense score is computed based on the defense parameter comprised in the defense message and is defined as a positive value such as "+1" if the defense parameter is such that the received triggerable attack message is not triggered and is defined as a negative value such as "-1" if the defense parameter is such that the received triggerable attack message is triggered.

In this way, it is possible to numerically record and monitor the successes and failures of the user device in preventing the simulated attacks, so that the user device can subsequently improve its reactions in the event of further simulated attacks of the same types. It should be noted that the absence of selection of a defense parameter after a predetermined time interval, for example one minute, can also be defined as leading to a positive cyber-defense score, since in this case the received triggerable attack message is also not triggered.

In an embodiment, the functional module is selected among at least one standalone module and/or at least one networkable module, the at least one standalone module comprising a module selected among a client email, a file explorer module, a browser module, a conversation module, an audio module, a video module and a file reader module, the at least one networkable module comprising a module selected among a client email, a contact or phone management module, a browser module, a text message module, a photo storage management module, a video storage management module and a scheduling module.

Herein, standalone modules refer to software components that can function independently without the need for network connectivity. They are designed to perform specific tasks and do not require interaction with other modules or systems. Networkable modules, on the other hand, are designed to interact with other systems or modules over a network. They can communicate and exchange data with other parts of a system, allowing for a higher degree of interactivity and cooperation between different software components.

This enables enhanced versatility and adaptability, as the inclusion of both standalone and networkable modules allows reproducing a wide range of simulated functionalities from email and browsers to media playback and file management, ensuring that cyberattacks are simulated across diverse platforms and applications. Real-life scenarios can be mimicked where a user device faces cyber threats in different digital environments. This also enables improved realism in training scenarios and sessions: by allowing the functional module to be chosen from such a varied list that includes both standalone applications like file readers and networked applications like client emails or contact management modules, the simulated cyberattacks can be tailored to the actual daily computer activities of the user or to the user device's usual antivirus and firewall opening sequence during normal activation. This ensures that the cybersecurity training is more relevant and context-aware, which could lead to better user engagement and improved defense against actual threats.

In an embodiment, the computing step e) comprises a subsequent step f) of displaying the computed cyber-defense score on a graphical interface.

This enables immediate feedback, as directly displaying the computed cyber-defense score on a graphical interface ensures that the user receives instantaneous feedback on their cybersecurity proficiency. If the user device automatically records and interprets the contents displayed on the graphical interface, the user device can also rely itself on this feedback for improving its own cybersecurity capabilities.

In possible embodiments, the graphical interface is the previously mentioned GUI, or any type of machine-to-human interface.

In possible embodiments, the graphical interface is comprised in the at least one user device and/or in an external device connected to the at least one user device.

In an embodiment, the at least one user device comprises a plurality of user devices, here called trainee devices, and:
- the step a) of preliminarily activating the functional module and the step b) of sending the trigger input message are both replaced by a step a2) of sending, from another user device, the another user device being called trainer device, an activation message to the cyberattack simulation module,
- The step c) of generating with and sending from the cyberattack simulation module the triggerable attack message to the interface module is replaced by a step c2) of, upon receipt of the activation message by the cyberattack simulation module, generating with and sending from the cyberattack simulation module, to an interface module of each trainee device, a triggerable attack message based on the activation message,

- The step d) of replying to the triggerable attack message is replaced by a step d2) of, upon receipt of each triggerable attack message by the interface module of each trainee device, replying to each triggerable attack message by selecting, with the interface module of the trainee device, a respective defense parameter, each respective defense parameter being subsequently sent by the interface module of the trainee device to the cyberattack simulation module inside a respective defense message, and
- the step e) of computing the cyber-defense score is replaced by a step e2) of, upon receipt of the respective defense messages by the cyberattack simulation module, computing a respective cyber-defense score of the trainee device based on the respective defense parameter comprised in the respective defense message.

This enables a centralized training and evaluation, as a central "trainer device" can activate and monitor the simulations and the cyberattacks for multiple "trainee devices". This also facilitates a centralized approach to cybersecurity training, where training sessions are run so that a single trainer can simultaneously evaluate the performance of multiple users, and so that a single trainer device can simultaneously assess the performance of multiple user devices. Consistent and comparative evaluation is also enabled, since sending standardized triggerable attack messages from the cyberattack simulation module to each trainee device is carried out based on a single activation message. All participants and user devices therefore face a uniform challenge, defining a cyber-range with a level "playing field" where the cyber-defense scores of different trainee devices can be directly compared, allowing for better insights into individual and collective strengths in cybersecurity proficiency and devices. This can be instrumental in recognizing the need for tailored training, for new protection software such as anti-viruses and firewalls to be installed on the user devices, or in identifying best practices that can be shared among users.

In possible embodiments, the computing step e) comprises a subsequent step f) of displaying the computed cyber-defense score on a graphical interface of the trainer device.

In an embodiment:
- the step a) of preliminarily activating the functional module and the step b) of sending the trigger input message are both replaced by a step a3) of sending, from a neural network module, to the cyberattack simulation module, the neural network module being connected to a network and an event engine module, an activation message, and
- the step d) of replying to the triggerable attack message comprises a step d3) of, upon receipt of the defense message by the cyberattack simulation module, informing the event engine module of the defense parameter comprised in the defense message, the step d) of replying to the triggerable attack message further comprises a step d4) of requesting, by the neural network module, a server to prepare simulation instructions based on data registered on the server, the server being connected to the event engine module and to the cyberattack simulation module, the step d) of replying to the triggerable attack message further comprises a step d5) of sending the prepared simulation instructions from the server to a cyberattack engine module of the cyberattack simulation module and the step d) of replying to the triggerable attack message further comprises a step g) of simulating, with the cyberattack engine module, at least one attack of the at least one user device.

Specifically, the computer-implemented method according to this embodiment is a computer-implemented method of training a neural network.

Herein, the network is preferably a simulated network but can also be a real network, such as the internet, with limited access capabilities to avoid real cyberattacks from occurring.

This enables artificial intelligence-driven proactive cyber-defense training. By having the neural network module cooperating with the cyberattack simulation system, the artificial intelligence capabilities not only adapt and predict emerging threats but also offer advanced, data-informed cyberattack simulations, ensuring users are trained against sophisticated and contextually relevant attack vectors and/or enabling user devices to become more dynamically reactive against cyberattacks. Intelligent Response and Dynamic Adaptation: The centralized event engine module, in conjunction with the Al-powered neural network, also facilitates a dynamic and responsive cyber-defense mechanism, leveraging Al to tailor simulations based on user behavior and system events.

In possible embodiments, the step g) of simulating, with the cyberattack engine module, at least one attack of the at least one user device is carried out based on the received simulation instructions.

In possible embodiments, the computer-implemented method further comprises a subsequent step f2) of providing the cyber-defense score to the neural network module.

In possible embodiments, the event engine module comprises processor for executing event-related instructions, a memory unit for storing event patterns and algorithms, an input/output interface for external data interaction, a data analysis sub-module for evaluating cybersecurity threats, a database connector for interfacing with external databases, a user interface connector for parameter setting and event log visualization, a power management component for optimal energy consumption, a security component ensuring data integrity and confidentiality, and a JSON parser for processing and analyzing JSON formatted event data.

In possible embodiments, a neural network module comprises a dedicated processor optimized for tensor operations such as a Tensor Processing Unit for accelerated tensor computations, a memory unit for storing context-based parameters and tensor-related data, an input/output interface for tensor data interaction, a database connector for interfacing with external databases containing tensor data. The neural network module may also comprise a power management component for efficient neural network computations, a security component for encrypted tensor data operations, and/or components adapted to process tensor data formats including the "TFRecord" format.

In possible embodiments, the step of sending the activation message from the neural network module to the cyberattack simulation module comprises the steps of sending a first activation message from the neural network module to the event engine module, sending a second activation message from the event engine module to the server and sending a third activation message from the server to the cyberattack simulation module, the third activation message sent being based on the received second activation message and the second activation message sent being based on the first received activation message. In a specific embodiment, the first, second and third activation messages are identical and define the activation message. Having different first, second and third activation messages allow each receiving module to include additional information in the next activation message.

In an embodiment:
- the step a) of preliminarily activating the functional module and the step b) of sending the trigger input message are both replaced by a step a3) of sending, from a neural network module, to the cyberattack simulation module, the neural network module being connected to a network and an event engine module, an activation message, and
- the step d) of replying to the triggerable attack message comprises a step d3) of, upon receipt of the defense message by the cyberattack simulation module, informing the event engine module of the defense parameter comprised in the defense message, the step d) of replying to the triggerable attack message further comprises a step d4) of requesting, by the neural network module, a server to prepare simulation instructions based on data registered on the server, the server being connected to the event engine module and to the cyberattack simulation module, the step d) of replying to the triggerable attack message further comprises a step d5) of sending the prepared simulation instructions from the server to a cyberattack engine module of the cyberattack simulation module and the step d) of replying to the triggerable attack message further comprises a step g) of simulating, with the cyberattack engine module, at least one attack of the at least one user device.

As the cyberattack simulation process presently relies on neural network capabilities to assess, predict, and model cyberthreats more effectively, this enables enhanced predictive capabilities through artificial intelligence integration. Specifically, this leads simulations to evolve based on vast and complex sets of data and parameters provided through the network, leading to a more realistic training environment.

A more efficient and dynamic cyberattack simulation workflow is also provided by the additional steps of communication between the neural network module, the event engine module, and the server, which together streamline the preparation and deployment of attack simulations. The informed collaboration of these components ensures that defense parameters are processed faster, with the simulated cyberattacks being data-informed and dynamically updated.

In an embodiment, the selected defense parameter comprises either a success parameter or a failure parameter, the computing step comprising, if the selected defense parameter comprises the failure parameter, a subsequent step g) of simulating, with a cyberattack engine module of the cyberattack simulation module, at least one attack of the at least one user device.

This enables a responsive and adaptive cyber-defense training mechanism where the system differentiates between successful and unsuccessful defense attempts. If a defense parameter selected by a user indicates a failure, the integrated cyberattack engine module can immediately launch a simulated cyberattack, providing real-time feedback and an enhanced learning experience for the user by exposing him/her to the consequences of his/her defensive choices. This also enables automated self-improvement mechanism for the cyber-defense capabilities of the user device. Upon detection of a defense parameter indicating failure, the cyberattack engine module instantly simulates an attack, allowing the device to learn, adapt, and refine its defense mechanisms without the need for human intervention, thus fortifying its resilience against actual cyber threats.

In an embodiment, the step g) of simulating the at least one attack of the at least one user device comprises the following steps:
- g1) sending, to the interface module of the at least one user device, a request to trigger the at least one functional module of the at least one user device,
- g2) receiving, from the interface module of the at least one user device, a response command to the trigger request, the step of receiving being carried out during a predetermined amount of time, and
- g3) activating the at least one simulated attack of the at least one user device.

In an embodiment, the step g) of simulating the at least one attack of the at least one user device further comprises the step:
- g4) providing, to the at least one user device, optional feedback information about the defense parameter and/or the response command.

This enables interactive and time-bound defense testing, as the sequence of steps, requests and commands introduces a technical and time-constrained environment for setting up the defense taken by the user or the user device itself. This ensures that the device is tested under conditions that closely mimic real-world cyberattack scenarios, where timely response is usually required. Also, by providing optional feedback information about the defense parameter and/or the response command, an adaptive learning is enabled through feedback, since each user device can analyze and interpret its own defense performance. This feedback mechanism enables refining and optimizing the defense strategies of each user device over time, promoting continuous improvement in its cyber-defense capabilities.

In an embodiment, the step of sending the trigger input message, the step of generating with and sending from the cyberattack simulation module the triggerable attack message, the step of replying to the triggerable attack message and the step of computing, with the cyberattack simulation module, a cyber-defense score, are repeated iteratively and successively during a predetermined amount of time, until the cyber-defense score is larger than a predetermined maximum score and/or until the cyber-defense score is smaller than a predetermined minimum score.

Relying on a successive repetition of the steps of sending, generating, replying, and computing within a set timeframe, this enables a dynamic evaluation and an enhancement of the cyber-defense proficiency of the users and of the cyber-defense capabilities of the user devices. The system iteratively evaluates cyber-defense reactions and mechanisms, ensuring continuous testing, gradually adapting defense strategies and thereby optimizing cyber-resilience over the course of the evaluation period. Target-driven defense optimization is also possible through the introduction of predefined maximum and minimum cyber-defense scores as benchmarks, thereby ensuring that the iterative process is goal-oriented. By working towards achieving a score within these thresholds, user devices are steered towards a desired cyber-defense performance level, ensuring that the physical resources of the computer devices are not wasted on unnecessary iterations and that the defense mechanisms are calibrated to cyber-defense current standards.

In possible embodiments, further cyberattacks being generated by the cyberattack simulation module are generated based on the computed cyber-defense score, such that the complexity and/or type of said further cyberattacks vary in accordance with the cyber-defense score of the at least one user device.

In an embodiment, the triggerable attack message is generated by the cyberattack simulation module based on a story parameter, the story parameter being registered in a memory of the cyberattack simulation module or in at least one story database of a story server connected to the cyberattack simulation module, the story server comprising an event database, a scene database and the story database.

This enables a contextualized and narrative-driven cyber-defense training environment, wherein the cyberattack scenarios presented to the user device are not random but are instead based on structured stories. By drawing from the story parameter stored either locally or on a dedicated story server with diverse databases, the cyberattack simulation module can craft more realistic, diverse, and engaging attack simulations, enhancing the preparedness of the user device by exposing the latter to a wider range of potential real-world cyber threats.

In an embodiment, the trainer device is connected to a trainer module, the trainer module comprising a simulation module, the simulation module comprising an event launch module connected to the event database, a scene launch module connected to the scene database and a story launch module connected to the story database, the generation of the story parameter being based on information stored in the event database, in the scene database and/or in the story database, the event launch module being configured to control the generation of the story parameter based on the information in the event database, the scene launch module being configured to control the generation of the story parameter based on the information in the scene database, and the story launch module being configured to control the generation of the story parameter based on the information in the story database.

This enables enhanced granularity and specificity in the design and execution of cyberattack simulations, as the integration of the trainer module with distinct launch modules allows for tailored story parameter generation based on multiple layers of stored information. By allowing the event, scene, and story launch modules to independently influence the story parameter, the system offers the capability to craft cyber-defense scenarios that can be intricately detailed and precisely adjusted to address specific vulnerabilities, training requirements, or threat landscapes, thereby providing a more comprehensive and versatile training environment for the user device.

In possible embodiments, the trainer device comprises the trainer module.

In possible embodiments, the trainer device comprises the graphical user interface, said graphical user interface comprising a simulated machine-to-man interface configured to display, on the trainer device, another graphical user interface representing the graphical user interface of the at least one trainee device.

In an embodiment, the neural network module is connected to a translator module, the translator module being connected to the event engine module, the translator module comprising a file format database and a source database, the neural network module being configured to control the generation of the triggerable attack message by the cyberattack simulation module.

This facilitates the integration and conversion of multiple data inputs into relevant cyberattack simulations. By linking the neural network module with a translator module equipped with both a file format repository and a source repository, the system can efficiently process and adapt a broad range of data formats and sources to align with the requirements of a given cyberattack simulation. Consequently, this framework creates a flexible training environment in which the neural network module harnesses artificial intelligence capabilities to craft sophisticated cyberattack simulations, drawing from extensive and diverse datasets to enhance the authenticity and applicability of training exercises.

In an embodiment, the story parameter used for generating the triggerable attack message is registered in the memory of the cyberattack simulation module by the event engine module, the registering of the story parameter is controlled by the neural network module based on at least one file format comprised in the file format database and on at least one source provided by the source database.

This enables enhanced flexibility and precision in preparing and generating triggerable attack messages by dynamically accessing and integrating diverse data sources and formats. Utilizing the artificial intelligence capabilities of the neural network module, the system can optimize the selection and registration of story parameters, ensuring the cyberattack simulations are both relevant and adaptable to various training contexts and evolving cyber threats.

The above-mentioned objects are also substantially achieved by the present disclosure that in a second aspect provides a data processing device comprising means for carrying out the steps of the method of any of the preceding embodiments.

The above-mentioned objects are also substantially achieved by the present disclosure that in a third aspect provides a computer program product comprising instructions which, when the program is executed by a computer, cause the computer to carry out the steps of any of the preceding embodiments.

The above-mentioned objects are also substantially achieved by the present disclosure that in a fourth aspect provides a computer-readable storage medium comprising instructions which, when executed by a computer, cause the computer to carry out the steps of any of the preceding embodiments.

### Brief Description of the Drawings

In order to explain the embodiments of the present invention or the technical solutions in the prior art more clearly, the following briefly introduces the accompanying drawings that need to be used in the description of the embodiments or the prior art. Obviously, the accompanying drawings in the following description are only These are some embodiments of the present invention. For those of ordinary skill in the art, other drawings can also be obtained according to these drawings without creative efforts.
Figure 1 shows an embodiment of a dataflow diagram for a computer-implemented method carried out by at least one user device interacting with a cyberattack simulation module, and here in the framework of a first mode called "arcade" mode.
Figure 2 shows, in the form of a flowchart, one embodiment of steps of a computer-implemented method in the framework of this first mode.
Figure 3 shows one embodiment of a dataflow diagram for a computer-implemented method carried out by at least one user device interacting with a cyberattack simulation module, and here in the framework of a second mode called "training" mode.
Figure 4 shows, in the form of a flowchart, one embodiment of steps of a computer-implemented method in the framework of this second mode.
Figure 5 shows one embodiment of a dataflow diagram for a computer-implemented method carried out by at least one user device interacting with a cyberattack simulation module, hereby for a third mode called "teaching" or "machine-learning" mode.
Figure 6 shows, in the form of a flowchart, one embodiment of steps of a computer-implemented method in the framework of the third mode.
Figure 7 shows, in the form of a flowchart, one embodiment of a simulation step for a computer-implemented method according to an embodiment.
Figure 8 shows a module or hardware architecture for carrying out computer-implemented method according to one embodiment.
Figure 9 shows another module or hardware architecture for carrying out computer-implemented method according to one embodiment.
Figure 10 shows a schematic block diagram of a computer processing circuit, according to one embodiment.

Unless otherwise indicated, elements common to or similar to several figures bear the same reference signs and have identical or similar features, so that these common elements are generally not described again for the sake of simplicity.

### Detailed Description of Embodiments

The technical solutions in the embodiments of the present invention will be clearly and completely described below with reference to the accompanying drawings in the embodiments of the present invention. Obviously, the described embodiments are only a part of the embodiments of the present invention, rather than all the embodiments. Based on the embodiments of the present invention, all other embodiments obtained by those of ordinary skill in the art without creative efforts shall fall within the protection scope of the present invention.

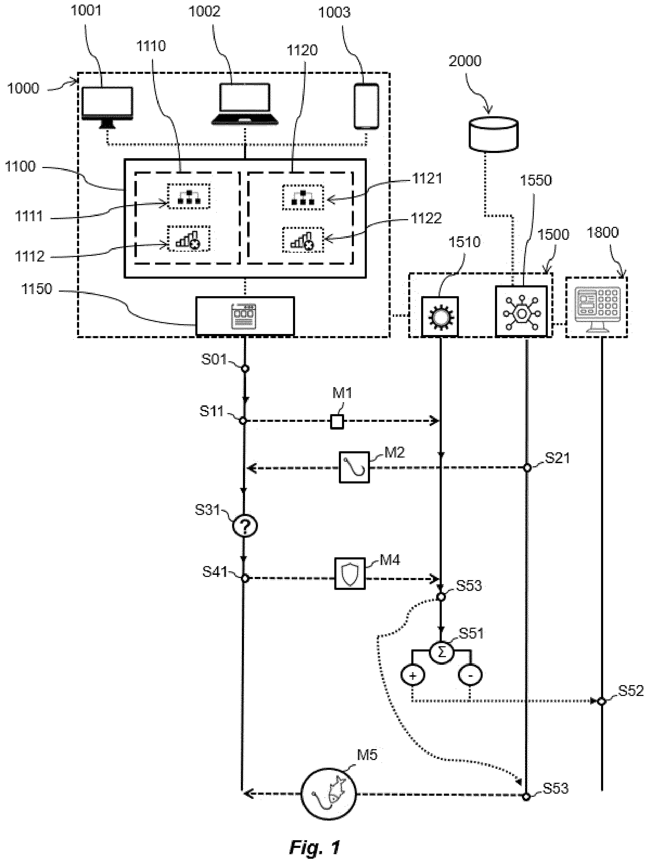

Figure 1 shows an embodiment of a dataflow diagram for a computer-implemented method carried out by three user devices 1001, 1002 and 1003 interacting with a cyberattack simulation module 1500, and here in the framework of a first mode called "arcade" mode.

In the present example, three separate users are willing to be trained in cybersecurity according to the "arcade mode". For instance, three passengers are waiting for boarding a flight in an airport room and are willing to use the available time for training themselves in cybersecurity awareness on a corresponding arcade machine installed in the airport room. This arcade machine, or any of the user devices, reproduces a simulated browser environment. Assuming three users, each user here interacts with a respective user device, one being a desktop 1001, another one being a laptop 1002 and a third one being smartphone 1003 on which the simulated browser environments enabling the computer-implemented method are installed.

Each of these user devices is connected to a functional module 1100, this interface module involving a desktop simulator 1110 and a mobile simulator 1120. The desktop simulator 1110 comprises a networkable module 1111 and a standalone module 1112, while the mobile simulator 1120 also includes a networkable module 1121 and a standalone module 1122. These modules include the web applications that can be used for the simulation. In alternatives, each user device can have its own interface module.

The standalone module 1110 includes simulated applications, i.e., applications with reduced functionalities, which can comprise a client email application, a network browser application, a file explorer, a chat application, a video application and/or a file reader for files such as text files, image files or spreadsheet files. The networkable module 1120 includes similar simulated applications, but can also include further types of applications seemingly dedicated to interacting with networks or external devices, such as a text message application, a SMS application, a banking application, a list of phone contacts that could be called, an access to a photo storage application or a video storage application, a calendar application etc. In practice, the simulated applications of the networkable module 1120 are not connected to such networks or external devices but merely give the impression that they are.

The functional module 1100 is connected to an interface module 1150 which can be any type of communication interface such as a machine-to-machine interface, a machine-to-human interface or a human-to-machine interface, including a keyboard, a webcam, a computer mouse, etc.

In "arcade" mode, the method is initiated by a preliminary activation step S01, for instance, when one of the three users decides to open or launch any one of the web applications available on the desktop simulator 1110 or the mobile simulator 1120, thereby initiating the training session. Following this activation, during a step S11, a trigger input message M1 is sent from this communication interface to the cyberattack simulation module 1500, which can be external or integrated to any of the user devices. For instance, one of the users can send a simulated e-mail from the client e-mail application of the standalone module 1110 to a given recipient (s)he believes exists, said simulated e-mail then corresponding to the message M1. In this case, the message M1 comprises an identification parameter of the user device from which it is sent. This identification parameter can be of any form, such as a login, a password, an IP address of the user device, etc. Upon receipt by the cyberattack simulation module 1500, more specifically by the cyberattack engine module 1510, this message M1 is then processed by a processor and/or a memory 1550 of the cyberattack simulation module 1500 to generate or simulate a triggerable attack message M2 during a step S21.

To improve the generation of attack messages M2, the memory 1550 can be connected to an external server or database 2000 providing up-to-date information or templates for providing more realistic messages during the next steps. For instance, the database or server 2000 can include templates of online forms or paper forms used by real administrations and organizations, but that are intended to be completed by the cyberattack engine module 1510 for generating and sending triggerable attack messages M2 comprising malicious attempts to collect private information from a user.

Herein and in all described embodiments, signal and data communication between the user devices, servers, modules such as functional modules and simulation modules, etc. is/are preferably carried out using JavaScript Object Notation, i.e., JSON, streams. JSON is a lightweight data-interchange format that is easy for humans to read and write and easy for machines to parse and generate. While other formats can be used, such as XML (eXtensible Markup Language), CSV (Comma-Separated Values) and BSON (Binary JSON) formats. Herein, JSON data formats are preferably transported using HTTP, i.e., "HyperText Transfer Protocols". To request resources, users and user devices rely on links such as URLs, i.e., Uniform Resource Locators. Therefore, it is preferred in the following embodiments that messages are formatted and transmitted using HTTP, thereby providing the default request-response protocol between clients (such as simulated browsers) and servers, which host real or simulated websites and web applications.

Herein, and for enabling full-duplex, long-lived communication channels between clients, modules and servers, a protocol reliably used in the present embodiments is the WebSocket protocol. Once initiated or established by a HTTP handshake, WebSocket protocol allows for real-time bidirectional data exchange, employing JSON as the preferred data format because of its universality and ease of use. Unlike traditional HTTP that operates on a request-response cycle, WebSocket maintain a continuous connection, making them ideal for the present embodiments, especially for simulated environments demanding instantaneous data transfer, such as chat platforms.

In the present case, an example of message M2 is a simulated fake response to the first message M1, e.g., impersonating the intended recipient of M1. In this message M2, which is sent also during the step S21, is included a malicious attempt such as a phishing attempt or a request to open an attached file or a link, and wherein the content of the message M2 invites the user or the user device itself to open said file or link during a step S31. The opening of this file or link may then trigger a simulated cyberattack of the user device, e.g., blocking the use of the email client application of the functional module 1100 on the corresponding user device.

The reaction or reply of the user during step S31 will typically depend on his own knowledge or awareness of such cybersecurity attack. Also, if the user device is directly invited to reply to the message M2 without user intervention, this reply will depend on the configuration of the user device. For instance, if the reaction is to directly open the file or the link, this will automatically result in the sending of a defense message M4 back to the cyberattack simulation module 1500 during a step S41, thereby informing the cyberattack simulation module 1500 of the opening of the file or link. In this case, the defense message M4 comprises a defense parameter indicating the failure of the user to provide an appropriate response to the malicious attempt content in the message M2. Otherwise, if the user had an appropriate reaction, e.g., deleting the attachment or the email corresponding to M2, a defense message M4 is sent anyway but with a defense parameter indicating the success of the user to respond in an appropriate way to the cyberattack.

In all cases, M4 is assessed by the cyberattack simulation module 1500 for computing, during a step S51, a score of the user based on each reaction and, if the steps of the method are carried out, which will be positive in case of success and negative in case of failure. Different values of scores can be allocated, the aim of the computing step S51 being to provide feedback to each user and/or user device which has been initially activated. In a subsequent step S52, the final score or any intermediary score can be displayed on a graphical interface 1800, thereby allowing a comparison and an evaluation of the responses of the user devices.

In an optional additional step S53, and in case of failure from the user or user devices when replying to the message M2, step S21 can be repeated but this time with a new trigger input message M5 send to the interface module 1150 of the functional module 1100 responsible for the failure. This new trigger input message can be a malicious attempt to gather more information from the user or the user device, this malicious attempt possibly looking more legitimate by mentioning information or parameters previously provided by the user or user device.

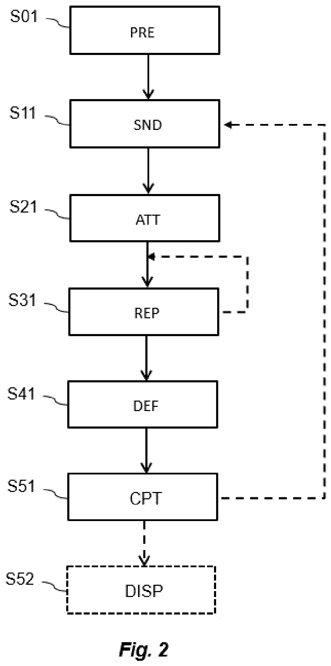

Figure 2 illustrates, in the form of a flowchart, one embodiment of steps S01 to S52 of a computer-implemented method in the framework of this first mode, the "arcade" mode.

As depicted, the method is initiated by the preliminary activation step S01 of the functional module 1100. Then, in a step S11, the trigger input message M1 is sent from any of the user devices to the cyberattack module 1500. Step S21 carries out a simulated attack on the user device from which the message M1 originated, said simulated attack comprising generating and sending the triggerable attack message M2. Following step S21, a reply step S31 is carried out and comprises replying to the triggerable attack message M2 with a defense message M4.

The reply step S31 may be repeated iteratively or during a first predetermined amount of time until the user or the user device performs an action, or not, enabling the issuance of the defense message M4 during a subsequent step S41, a selected defense parameter being included in said defense message M4. While the defense parameter can be indicative of a successful response or of a failing response, the defense parameter may also be indicative of the absence of any reaction during the first predetermined amount of time, which may also be considered either as a success or as a failure. The first predetermined amount of time is, for instance, selected as 60, 90, 120 or 180 seconds.

Following the step S41 of sending the defense message M4 from any user device 1001, 1002, 1003 to the cyberattack module 1500, a computing step S51 is carried out according to preset rules, e.g., defining a "+1" score for each received message M4 including a defense parameter indicative of a success and a "-1" score for each message M4 including a defense parameter indicative of a failure. As overall feedback of the cyberattack simulation method is preferred, step S51 is optionally followed by a new iteration of steps S11, S21, S31, S41 and S51 during a second predetermined amount of time or for a predetermined number of iterations, such as five iterations. The second predetermined amount of time defines how long the training session corresponding to the method is to be carried out, for instance at least five times the first amount of time if five actions are expected from the user devices, typically between 300 and 900 seconds. In an optional step S52 following one or more iterations of the steps S11, S21, S31, S41 and S51, the computed score or the aggregated score is then displayed on an external screen, a graphical user interface of the user devices 1001, 1002, 1003 or any other means to inform the users or the user devices directly.

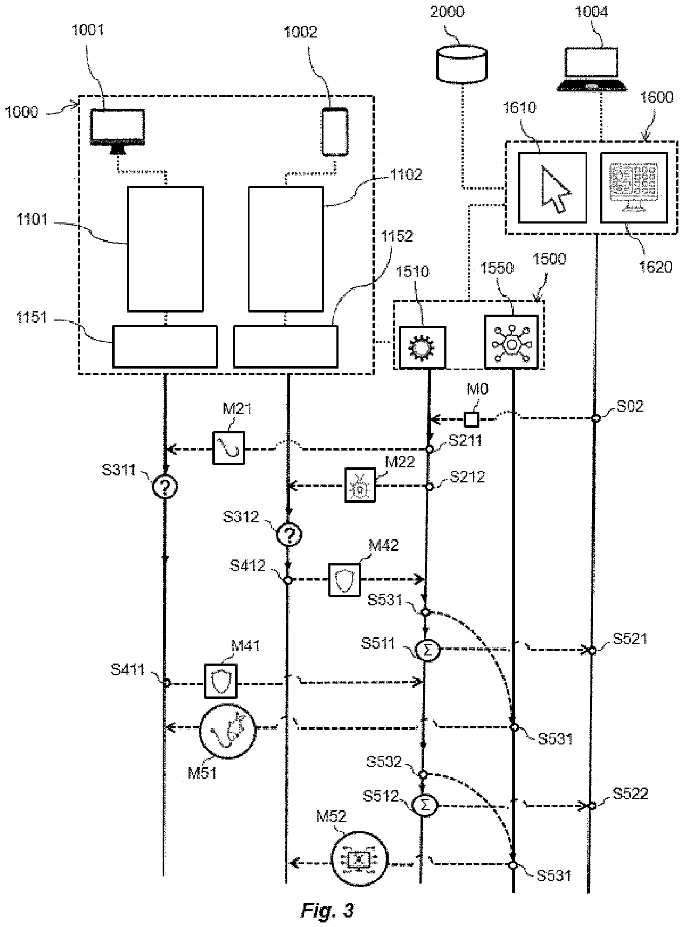

Figure 3 illustrates one embodiment of a dataflow diagram for a computer-implemented method carried out by two user devices 1001 and 1002, called trainee devices, interacting with a cyberattack simulation module 1500, the cyberattack simulation module 1500 being connected to another user device 1004, called trainer device, and here in the framework of a second mode called "training" mode.

In this "training" mode, the implementation of the various steps is managed by the trainer device 1004, which may be operated by a human user. The trainer device 1004 is connected to or comprises a trainer module 1600, which itself comprises a simulation module 1610 and, preferably, a graphical user interface 1620. The graphical user interface 1620 provides a supervisory view, for example by displaying in a dedicated screen or browser of the trainer device 1004, a window displaying the same content as displayed in the browser of the user device 1001 and/or 1002, thereby facilitating visualization of the cyberattack simulation session from the point of view of the trainer device 1004 and its user, if any.

The simulation module 1610 defines a launch console, which is used to trigger the start of cyberattack simulations, the customized sending of messages that may be modified by the trainer device 1004, and/or the manual or automated generation of a sequence of several cyberattack simulations on the user device(s) 1001 and 1002. For the sake of simplicity, only two user devices 1001 and 1002, called trainee devices, their functional modules 1101 and 1102, as well as their associated and distinct communication interfaces 1151 and 1152, are shown here. Of course, a large number of user devices, or even several trainee devices, can also be used to carry out the method, particularly in the case of a pedagogical implementation of the "training" mode to a group of users and/or machines, when dispensed as part of a training session designed to mitigate the risks of cyberattacks.

Still in this "training" mode, the sequence of steps is different from that in the "arcade" mode. Specifically, and instead of a preliminary activation step S01, the method is initialized by sending an activation message M0 from the trainer device 1004 to the cyberattack simulation module 1500 during a step S02. The next steps are then triggered by the simulation module 1610 of the trainer module 1600 of the trainer device 1004, and not by the trainee devices themselves, by directly interacting with the cyberattack simulation module 1500. When activated, the cyberattack simulation module 1500, in turn, sends one or more triggerable attack messages M21 and/or M22 to the user devices 1001 and 1002.

The case of two messages being sent simultaneously or subsequently is illustrated, with a first message M21 being sent to the first user device 1001, and the second message M22 being sent to the second user device 1002. The first message M21 is, for example, a phishing email proposing the opening of a malicious link, while the second message M22 comprises an audio file sent by a sender whose identity has been usurped, the content of which being simulated, and the opening of this audio file being programmed to trigger the installation of several fake malicious applications in the functional module 1102 of the smartphone 1002.

The series of steps S311, S411, S511, S521 and S531 and the series of steps S311, S411, S511, S521 and S531 are then simply a duplication of steps S31, S41, S51, S52 and S53 described above for the "arcade" mode since the figure here describes the implementation of these same steps not for a single user device but for two user devices. This can of course be extended to any number of user devices.

Although this duplication is easy to implement, the optional additional steps S531 and S532 pertaining to the sending of new trigger input messages M51 and M52 sent separately to the interface modules 1151 and 1152 of the corresponding user devices 1001 and 1002 can be combined in such a way that these trigger input messages M51 and M52 can comprise information and parameters collected from the user devices 1001 and 1002 using the previous messages M21 and M22. For instance, the user device 1001, after receiving message M21, may have failed in its attempt to avoid the phishing to which it was subjected, and as a result may have transmitted an identifier or password which message M41 can then include and provide to the cyberattack simulation module 1500. This identifier or password can then be used to reinforce the credibility of the M52 message subsequently sent to the user device 1002 and generated by the cyberattack engine module 1500, this message being falsely indicated as coming from the user device 1001 thanks to knowledge of its identifier and/or associated password, in order to make the user device 1002 believe that the M52 message is legitimate. Such a functionality can also be implemented in the "arcade" mode when several user devices are present.

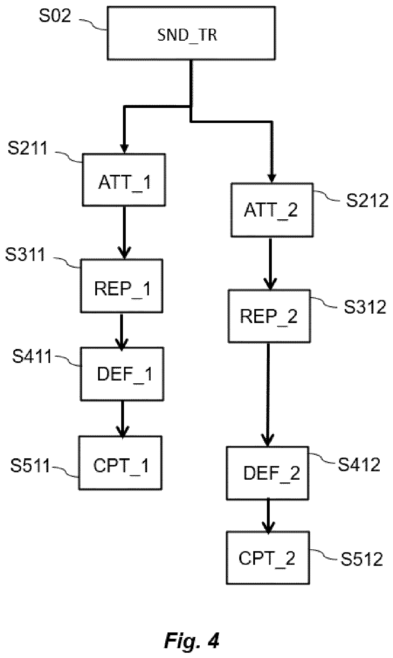

Figure 4 illustrates in the form of a flowchart, one embodiment of steps S02 to S511 and S512 of a computer-implemented method in the framework of the second mode, the "training" mode.

As depicted, in the "training" mode, the method is initiated not by the preliminary activation step S01 but by the sending step S02 corresponding to the sending, from the trainer device 1004 and to the cyberattack simulation module 1500, of the activation message M0. In turn, and in the present particular case of two user devices 1001 and 1002 carrying out the method, the step S21 of generating with and sending from the cyberattack simulation module 1500, to each interface module 1151 and 1152, triggerable attack messages, not based on trigger input messages but on the activation message M0, the step S31 of replying to the triggerable attack message with the interface module, including selecting a defense parameter, the step S41 of sending the selected defense parameter to the cyberattack simulation module and the step S51 of computing a cyber-defense score with the cyberattack simulation module 1500 of each user device based on the respective defense parameter are each duplicated as described previously.

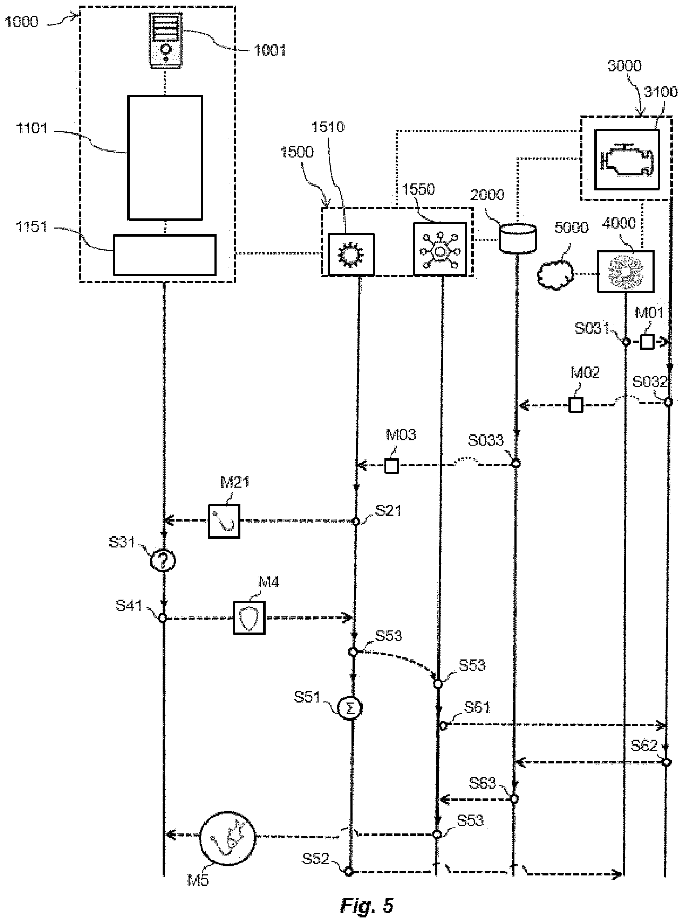

Figure 5 illustrates one embodiment of a dataflow diagram for a computer-implemented method carried out by a single user device 1001, such as a pre-programmed computer server, adapted to interact with a cyberattack simulation module 1500 having a cyberattack engine module 1510 and a memory 1550, the cyberattack simulation module 1500 being further connected to an event engine module 3000 and a neural network module 4000, all here in the framework of a third mode called "self-teaching" or "machine-learning" mode. The cyberattack simulation module 1500 and the event engine module 3000 are also connected to an external server 2000.

As illustrated, the pre-programmed computer server 1001 comprises a functional module 1101 and an interface module 1151, the interface module 1151 being connected directly to the cyberattack simulation module 1500. The neural network module 4000, is programmed to communicate with and give instructions to an event engine module 3000 which comprises a story building module 3100, and is optionally connected to a network, such as the internet 5000.

In this "machine-learning" mode, the implementation of the various steps is managed by the neural network module 4000, which is operated by an artificial intelligence. Still in this "machine-learning" mode, the sequence of steps is different from that in the "arcade" mode. Instead of a preliminary activation step S01, the method is initialized by sending an activation message from the neural network module 4000 to the cyberattack simulation module 1500, said activation message being generated by the artificial intelligence based on a given context.

Specifically, the sending of this activation message is separated into three separate sub-steps S031, S032 and S033, the first sub-step S031 comprising sending a first activation sub-message M01 from the neural network module 4000 to the story building module 3100, the story building module 3100 generating in turn a second activation sub-message M02 which is sent to the external server 2000, the external server 2000 generating in turn a third activation sub-message M03 which is sent from the external server 2000 to the cyberattack engine module 1510.

The subsequent steps S21, S31, S41, S51, S52 and S53 then follow a pattern to that of the "arcade" mode, except that any triggerable attack message which is generated thereafter is generated on command or prompt by the neural network module 4000 rather than by the cyberattack simulation module 1500. In addition, the neural network module 4000 is specifically configured to request, after being informed in step S61 by the event engine module 3000 of the defense parameter included in the defense message M4, the server 2000 to prepare simulation instructions based on the data stored on said server 2000. Here, the server 2000 is connected to the event engine module 3000 and to the cyberattack simulation module 1500.

Furthermore, any response to the triggerable attack message M21 always includes sending, in a step S63, the simulation instructions prepared by the server 2000 to the cyber-attack engine module 1510 of the cyber-attack simulation module 1500. When replying to a triggerable attack message M21, the cyber-attack engine module 1510 is further configured to simulate an attack on the user device 1001.

Unlike a pre-programmed cyberattack simulation module 1500, which operates based on pre-set conditions and parameters, the neural network module 4000 offers the distinct technical advantage of adaptability and more dynamical generation. Being operated by an artificial intelligence, the neural network module 4000 responds dynamically to different scenarios and contexts, ensuring the simulation of more realistic cyberattacks. The capability of the neural network module 4000 to generate an activation message based on a given context also leads to more sophisticated and nuanced simulation processes.

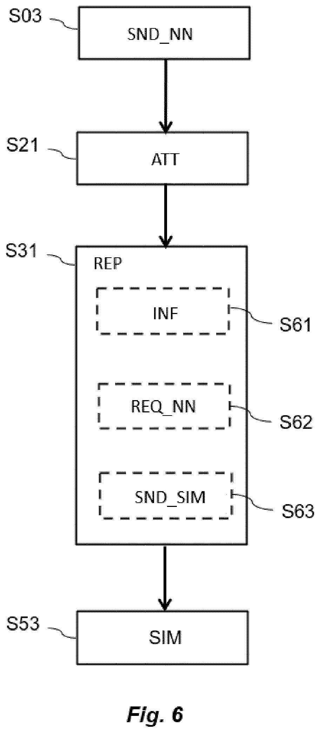

Figure 6 illustrates in the form of a flowchart, one embodiment of steps S03 to S53 of a computer-implemented method in the framework of the third mode, i.e., the self-teaching" or "machine-learning" mode.

As depicted, this method is initiated by a preliminary activation step S03 comprising a sending of an activation message M0 from the neural network module 4000. This activation message M0 is sent to the cyberattack simulation module 1500, to which the neural network module 4000 is connected. The neural network module 4000 is also connected to a network 5000 and also to the event engine module 3000.

As explained previously in connection with the subsequent messages M01, M02 and M03, the transmission of the activation message during step S03 can correspond to the transmission of three subsequent messages M01, M02 and M03 during the subsequent sub-steps S031, S032 and S033.

Like in the previous embodiment, a step S21 then carries out a simulated attack of the user device 1001 with a corresponding triggerable attack message M21. The choice of the user device being attacked among a plurality is defined either by the neural network module 4000 or randomly. In case of a plurality of user devices, each user device is submitted to at least one simulated attack with a corresponding triggerable attack message.

Following step S21, a reply step S31 is carried out and comprises replying to the triggerable attack message M21 with a defense message M4. Specifically, in the depicted embodiment, the step S31 of replying comprises three steps S61, S62 and S63. The step S61 comprises informing the event engine module 3000 of the defense parameter comprised in the defense message M4. Following step S61, and during a step S62, the neural network module 4000 sends a request to the server 2000, said request triggering the server 2000 to prepare one or more simulation instructions based on data registered on said server 2000.

Then, following step S62, and during a step S63, the server 2000 sends the prepared simulation instructions to the cyberattack simulation module 1500 and, more specifically to the cyberattack engine module 1510 of the cyberattack simulation module 1500.

After step S31, i.e., in the present case after step S63, the step S53 of simulating the cyberattack is carried out. In particular, during said step S53, the cyberattack engine module 1510 simulates at least one attack M5, for instance a corresponding attack message M5, which is sent to the user device 1001, or any other user device targeted by the simulated cyberattack.

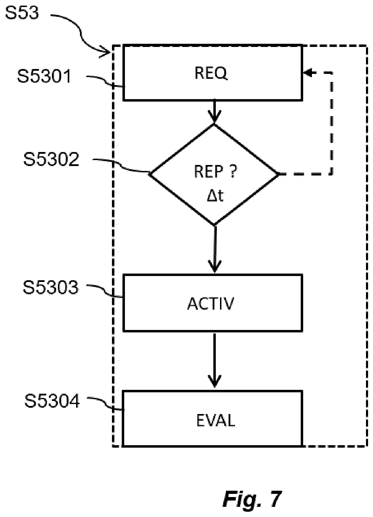

Figure 7 illustrates in the form of a flowchart, one embodiment of a simulation step S53 for a computer-implemented method according to an embodiment.

A simulation step S53 of an attack of at least one user device can also be partially or totally implemented during the generation and sending step S21. The simulation step S53 corresponds to the follow-up of the sending of the triggerable attack message M2 during step S21, by releasing or triggering a pre-configured or a given cyberattack contained in the triggerable attack message M2. This release or triggering can also correspond to the sending of a separate cyberattack message M5, M51 and/or M52 by the cyberattack engine module 1520 to the user device 1000 or to any plurality of user devices 1001, 1002 and 1003 which have been the subject of a preliminary activation (step S01) or which have been the origin of a triggering input message, for example the message M1.

The simulation step S53 comprises four sub-steps S5301, S5302, S5303 and S5304, each sub-step being implemented by the cyberattack engine module 1520, the first three of these sub-steps being repeatable iteratively.

In this case, the first sub-step S5301 is a trigger sub-step, i.e., a sub-step of sending a corresponding request to trigger the activation of an application installed on the functional module 1100 of one of the user devices. For example, if this application is a chat application, the request may correspond to the automated or non-automated triggering of a simulated malicious link, or the sending of a message whose apparent sender usurps the identity of a real sender. The request of sub-step S5301 can also involve sending a text file infected with a simulated virus that can be triggered when opened by a user or a user device, sending a link that can be opened in a web browser but redirects the browser application of the user device to a simulated malicious site, or offering to download an unsecured file.

The second sub-step S5302 is a reaction wait sub-step, corresponding to the receiving, from the interface module of the at least one user device of a response command to the trigger request. This second sub-step S5302 is carried out during a predetermined amount of time, until a response command is issued to reply to the trigger request. The expected reaction or response command may include clicking on the link, downloading the file, executing a macro, following a simulated redirection over the internet, etc. The second sub-step can be implemented within a predetermined time interval, for example one minute, two minutes, etc.

The third sub-step, S5303, is an outcome sub-step, which defines the effect of the simulation step S53, i.e., whether the user device is compromised by the simulated cyberattack. For example, if the user device has accepted the simulated download of a malware file, the user device will be defined as compromised. On the other hand, if the downloading of the malware file has not been initiated or has been interrupted by the user device after the predetermined time interval, the user device will be considered as not compromised. Subsequently, compromission or non-compromission of the user device results in computing a cyber-defense score that is either negative or positive. According to other examples, a user device can be defined as infected or compromised when a macro has been executed despite its malicious nature, or when a simulated internet link redirection has been accepted by the user device even though it could have been interpreted as dangerous, and therefore avoided.

In some possible embodiments, the user devices can be connected to each other via an internal network or via their interface communication. This makes it possible, in the event of a simulated cyberattack being triggered on one of the user devices, to have these user devices interact by means of message transmission between them.

The fourth sub-step S5304 is an evaluation sub-step, which is similar to or includes the computing step S51 previously described, and further includes the provision of qualitative feedback summarizing the reactions implemented in the previous sub-steps, and further describing which reactions were appropriate from a simulated cyberattack defense point of view so as to provide a positive cyber-defense score, and what could have been implemented differently to avoid a negative score. This assessment can be provided to all user devices.

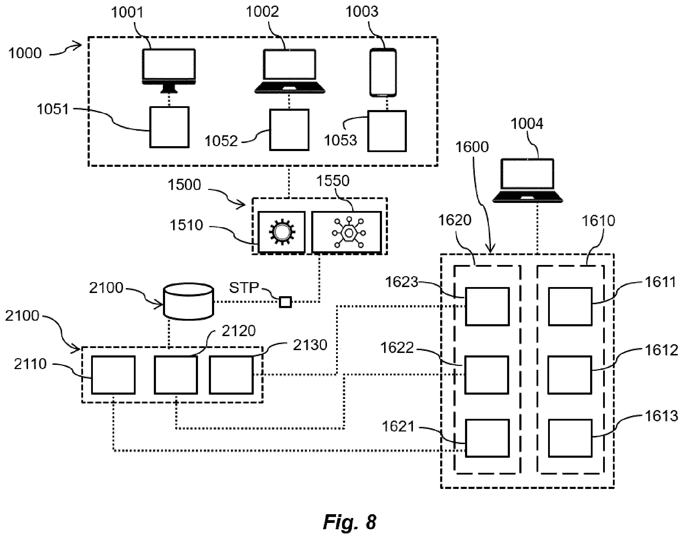

Figure 8 illustrates a module or hardware architecture for carrying out computer-implemented method with three user devices 1001, 1002 and 1003 as well as a cyberattack simulation module 1500 and another user device 1004, according to one embodiment, most specifically in the second mode, or "training" mode.

The components of this module or hardware architecture can be used to describe how, in this second mode, or "training" mode, the triggerable attack message M2 is generated using sequences of interactions, referred to in this document as "stories".

Specifically, a given story is generated based on a respective story parameter STP, said story parameter STP being exchanged between the cyberattack simulation module 1500 and a dedicated server 2100 called story server 2100.

The story server 2100 can create a given story based on the story parameter STP received and saved in one of its memories. In particular, the story server 2100 has a memory wherein different catalogs, lists or databases 2110, 2120 and 2130 are saved separately. As depicted, the story server 2100 comprises an event database 2110, a scene database 2120 and a story database 2130.

The story server 2100 enables the creation of a given story, i.e., a sequence of possible interactions or signals intended for the user devices 1001, 1002 and 1003 to react, in order to assess their defense capabilities through a successful or a failure response. Once a story is created, it will be used to generate the triggerable attack message M2 for one or more user devices among 1001, 1002 and 1003.

When it is present, the trainer device 1004 is connected to a trainer module 1600, which is intended to further enhance the realism and/or the complexity of each story created for the simulation of the cyberattacks through one or more message(s) M2, these messages being different for each simulated cyberattack.

The trainer module 1600 comprises the graphical user interface 1620 as well as a corresponding simulation module 1610. The simulation module 1610 itself comprises the three different modules including an event launch module 1621 connected to the event database 2110 of the story server 2100, a scene launch module 1622 connected to the scene database 2120 of the story server 2100 and a story launch module 1623 connected to the story database 2130 of the story server 2100. The creation of the story depends on the generated story parameter STP, which itself is based on information stored in the event database 2110, in the scene database 2120 and/or in the story database 2130.

Herein, scenes and events are preferably sent to a WebSocket client using the JSON format. JSON streams can then be used for data communication between user devices, modules, and servers. Additionally, when WebSocket clients are installed and used on user devices, data sent from said WebSocket clients to WebSocket servers usually transit via API gateways, such as an Application Programming Interface server, i.e., an API gateway server.

Herein, an API gateway server acts as a middle layer that handles incoming API requests, directing them to the appropriate services and potentially managing functionalities like load balancing, caching, authentication, and rate limiting. While WebSockets facilitate real-time bidirectional communication, API gateways can manage and route WebSocket connections just as it does for traditional HTTP requests. For applications relying WebSockets, API gateways provide unified access points while managing the WebSocket connections, thereby offering security layers against potential external cyberattacks, and aggregate multiple services, ensuring that data-whether transferred through traditional HTTP or WebSockets-is properly routed and managed.

The event launch module 1621 itself controls the generation of the story parameter STP based on the event database 2110. Similarly, the scene launch module 1622 controls the generation of the story parameter STP based on the information in the scene database 2120 while the story launch module 1623 is configured to control the generation of the story parameter STP based on the information in the story database 2130.

Herein, the scene database 2120 comprises a list of scenes A, B, C, ... where each scene is a succession of events such as opening a file, clicking on a link, inputting a password, running a video file, etc., said succession of events each having a beginning and an end, and defined by a time length associated to the time elapsing between the beginning and the end. The story database 2130 comprises, in a memory, a list of possible stories A, B, C, D, etc. A given story is formed by a succession of scenes, the ending of each scene being followed by a selection of a parameter. The selected parameter defines how said scene will be followed by the beginning of another scene. For instance, at the end of scene A, a user or a user device can decide to proceed with either the scene A again, or another scene B, thereby creating a succession of scenes being either AA or AB. From one to the next, a story comprises a sequence of possible scenes AA, AB, AC, ..., BA, BB, BC ..., CA, CB, CC, ..., each story being registered in the story database 2130 for use to generate the triggerable attack message M2.

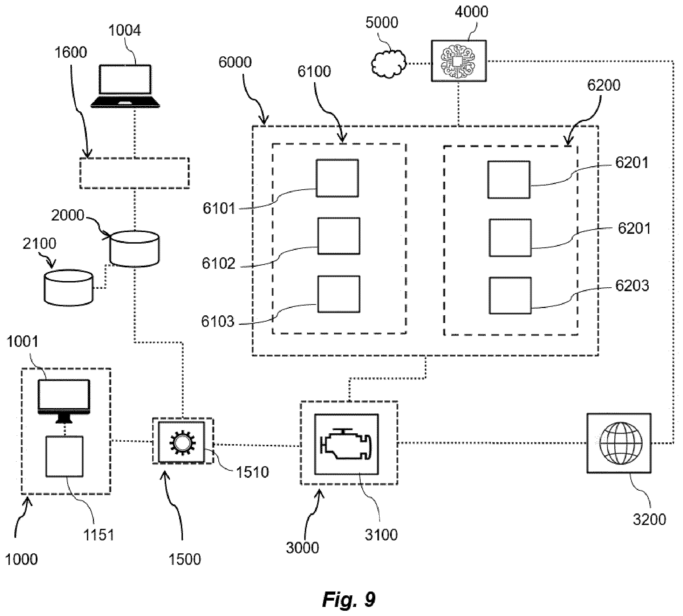

Figure 9 illustrates another module or hardware architecture for carrying out computer-implemented method according to one embodiment, most specifically when combining the second and third modes, i.e., the training mode and the machine-learning mode together.

As depicted, the components of this module or hardware architecture can be used to describe how, in such an embodiment, the neural network module 4000, when connected to a network 5000, to a translator module 6000 and to a web application 3200, the translator module 6000 and the web application 3200 themselves being connected to the event engine module 3000, enable the neural network module 4000 and the trainer device 1004 to cooperate together to provide a enhanced method and system for training or improving one or more user devices 1000 in view of mitigating simulated cyberattacks.

The translator module 6000 comprises a file format database 6100 and a source database 6200. In possible embodiments, file formats 6101, 6102 and 6103 comprised in the file format database 6100 may comprise editable and non-editable text documents such as technical analyses, real mailbox emails, malware text files, spreadsheet documents, links to simulated malicious websites, etc. Data sources 6201, 6202 and 6203 comprised in or connected to the source database 6200 may comprise email servers, email clients, any types of sandboxes, dedicated malware data sources, specialized malware search engines, etc. In any case, these file formats and data sources can be combined altogether by the translator module 6000, upon command of the neural network module 4000, and be provided to the event engine module 3000. Preferably, they are provided to the story building module 3100 of the event engine module 3000, the story building module 3100 being configured to generate activation sub-messages based on provided input.

In this embodiment, the user device 1001 comprises an interface module 1151 connected to the cyberattack simulation module 1500 comprising the cyberattack engine module 1510. The cyberattack simulation module 1500 itself is connected to the trainer device 1004 via a server 2000 and/or the trainer module 1600 of the trainer device 1004, the server 2000 preferably being or comprising the story server 2100.

Advantageously, the server 2000 is connected to or is itself the story server 2100. In this case, the generation of triggerable attack messages M2 intended for the user device 1001 benefits from enhanced complexity thanks to the indirect cooperation of the neural network module 4000 and of the trainer device 1004. For instance, the simulated cyberattacks can be generated based on the previously described story parameter STP, said story parameter STP being registered in a memory of the cyberattack simulation module 1500 or in at least one story database of the story server 2100. The neural network module 4000 thereby controls the generation of all triggerable attack messages by the cyberattack simulation module 1500, with the possibility for the trainer device 1004 to tune, i.e., to intervene in said generation by providing different and/or additional inputs, said inputs being available on the server 2000 or on the story server 2100, such as events, scenes and stories. This makes it possible to introduce an additional degree of randomization and/or to better manage the autonomous running of the neural network module 4000 during the simulation of a cyberattack.

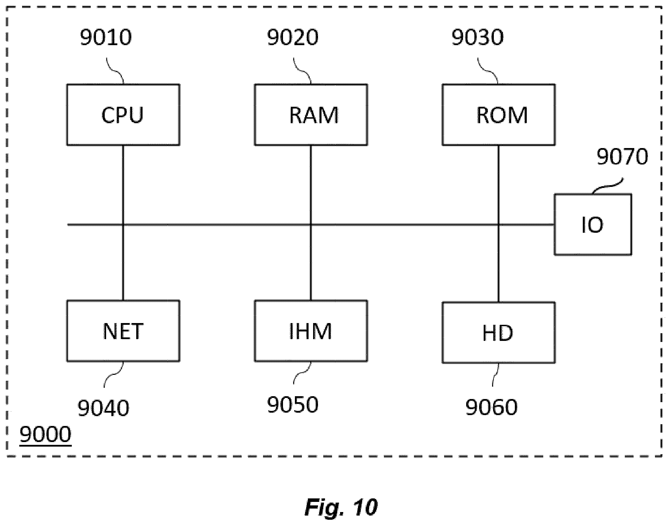

Figure 10 represents a schematic block diagram of a computer processing circuit 9000 according to an example of implementation of the described embodiments. This computer processing circuit provides an example of architecture of previously described modules and/or hardware components, including but not limited to the at least one user device 1000, the interface modules 1150, 1151 and 1152, the functional module 1100, the cyberattack simulation module 1500, the trainer device 1004, the neural network module 4000, or any other databases and modules.

According to an example, said computer processing circuit is a processor or a microprocessor. Preferably, such a computer processing circuit is simply a system on a chip 9000 arranged to implement a process of controlling a peripheral computer network. In particular, this computer processing circuit can correspond to a hardware element defining or included in one of the at least one user device 1000, 1001, 1002, 1003 or 1004.

Without limitation, the system on a chip 9000 has a communication bus connected, for example, to a central processing unit 9010, such as a processor or a microprocessor, and called CPU.

The system on a chip 9000 further comprises a random-access memory 9020, called RAM, capable of storing the executable code of the control process as well as the registers adapted to record variables and parameters necessary for the implementation of the process according to embodiments, the memory capacity of which can be supplemented by an optional RAM memory connected to an extension port, for example.

Furthermore, the system on a chip 9000 has a read-only memory 9030, called ROM, for storing computer programs for the implementation of the previously described embodiments, as well as a network interface 9040 which is normally connected to a communication network on which digital data to be processed are transmitted or received.

The network interface 9040 can be a single network interface or composed of a set of different network interfaces (for example wired and wireless, interfaces or different types of wired or wireless interfaces).

Data packets are sent on the network interface for transmission or are read from the network interface for reception under the control of the software application executed in the processor or the microprocessor 9010.

In addition, the system on a chip 9000 has a user interface 9050 for receiving inputs from a user or for displaying information to a user, an optional storage medium 9060 called HD, and an input-output module 9070, called lO, for the reception, sending of data from or to external devices such as hard disk, removable storage medium or others.

In an example presented here, the executable code can be stored in a read-only memory 9030, on the storage medium 9060 or on a removable digital medium such as for example a disk.

According to an embodiment, the executable code of the programs can be received by means of a communication network, via the network interface 9040, in order to be stored in the storage medium 9060, before being executed.

The central processing unit 9010 is adapted to command and direct the execution of the instructions or portions of software code of the program or programs according to one of the embodiments, instructions which are stored in one of the aforementioned storage means. After powering up, the CPU 9010 is capable of executing instructions stored in the main RAM memory 9020, relating to a software application, after these instructions have been loaded from the ROM for example.

In the example presented here, the system on a chip 9000 is a programmable device that uses software. However, alternatively, the present description can be implemented in any type of hardware (for example, in the form of a specific integrated circuit or ASIC). It is apparent to those skilled in the art that the present disclosure and invention may be embodied in other specific forms without departing from essential features of the present disclosure. Accordingly, the disclosure should not be construed as restrictive in all terms and should be exemplarily considered. The scope of the present disclosure should be determined by rational construing of the appended claims and all modifications within an equivalent scope of the present disclosure are included in the scope of the present disclosure and invention.

It is apparent to those skilled in the art that the present disclosure and invention may be embodied in other specific forms without departing from essential features of the present disclosure. Accordingly, the disclosure should not be construed as restrictive in all terms and should be exemplarily considered. The scope of the present disclosure should be determined by rational construing of the appended claims and all modifications within an equivalent scope of the present disclosure are included in the scope of the present disclosure and invention.

Further, the present subject disclosure comprises embodiments according to the following clause "A", namely:
A. A computer-implemented method carried out by at least one user device comprising an interface module, the method comprising the steps of:
   a) preliminarily activating a functional module of the interface module,
   b) sending, from the functional module, to a cyberattack simulation module, a trigger input message which comprises an identification parameter of the at least one user device,
   c) upon receipt of the trigger input message by the cyberattack simulation module, generating with and sending from the cyberattack simulation module, to the interface module, a triggerable attack message based on the trigger input message,
   d) upon receipt of the triggerable attack message by the interface module, replying to the triggerable attack message, with the interface module of the at least one user device, the step of replying comprising selecting a defense parameter, the defense parameter being subsequently sent by the interface module inside a defense message to the cyberattack simulation module, and
   e) upon receipt of the defense message by the cyberattack simulation module, computing, with the cyberattack simulation module, a cyber-defense score of the at least one user device based on the defense parameter comprised in the defense message, and wherein the step a) of preliminarily activating the functional module and the step b) of sending the trigger input message are both replaced by a step a3) of sending, from a neural network module, to the cyberattack simulation module, the neural network module being connected to a network and an event engine module, an activation message, the step d) of replying to the triggerable attack message comprising a step d3) of, upon receipt of the defense message by the cyberattack simulation module, informing the event engine module of the defense parameter comprised in the defense message, the step d) of replying to the triggerable attack message comprises further comprising a step d4) of requesting, by the neural network module, a server to prepare simulation instructions based on data registered on the server, the server being connected to the event engine module and to the cyberattack simulation module, the step d) of replying to the triggerable attack message comprises further comprising a step d5) of sending the prepared simulation instructions from the server to a cyberattack engine module of the cyberattack simulation module and the step d) of replying to the triggerable attack message comprises further comprising a step g) of simulating, with the cyberattack engine module, at least one attack of the at least one user device.

As illustrated in Figure 5, an embodiment of clause "A" pertains to a computer-implemented method carried out by at least one user device 1000, 1001, 1002, 1003 which comprises an interface module 1150, 1151, 1152, the method comprising the steps of:
a3) sending, from a neural network module 4000, to a cyberattack simulation module 1500, the neural network module 4000 being connected to a network 5000 and an event engine module 3000, an activation message M0, M01, M02, M03,
c) upon receipt of a trigger input message M1 by the cyberattack simulation module 1500, generating with and sending from the cyberattack simulation module 1500, to the interface module 1150, a triggerable attack message M2 based on the trigger input message M1,
d) upon receipt of the triggerable attack message M2 by the interface module 1150, 1151, 1152, replying to the triggerable attack message M2 with the interface module 1150, 1151, 1152 of the at least one user device 1000, 1001, 1002, 1003, wherein the step of replying comprises selecting a defense parameter and the defense parameter is subsequently sent by the interface module 1150, 1151, 1152 inside a defense message M4 to the cyberattack simulation module 1500, wherein the step d) of replying S31 to the triggerable attack message comprises the steps of
   d3) upon receipt of the defense message M4 by the cyberattack simulation module 1500, informing the event engine module 3000 of the defense parameter comprised in the defense message M4,
   d4) requesting by the neural network module 4000, a server 2000 to prepare simulation instructions based on data registered on the server 2000, the server 2000 being connected to the event engine module 3000 and to the cyberattack simulation module 1500,
   d5) sending the prepared simulation instructions from the server 2000 to a cyberattack engine module 1510 of the cyberattack simulation module 1500,
   g) simulating, with the cyberattack engine module 1510, at least one attack M5 of the at least one user device 1000, 1001, 1002, 1003, and
e) upon receipt of the defense message M4 by the cyberattack simulation module 1500, computing, with the cyberattack simulation module 1500, a cyber-defense score of the at least one user device 1000, 1001, 1002, 1003 based on the defense parameter comprised in the defense message M4.

## Claims

1. A computer-implemented method carried out by at least one user device (1000 ; 1001, 1002, 1003) comprising an interface module (1150 ; 1151, 1152) the method comprising the steps of:
a) preliminarily activating (S01) a functional module (1100) of the interface module (1150),
b) sending (S11), from the functional module (1100), to a cyberattack simulation module (1500), a trigger input message (M1) which comprises an identification parameter of the at least one user device (1000 ; 1001, 1002, 1003),
c) upon receipt of a trigger input message (M1) by the cyberattack simulation module (1500), generating with and sending from (S21) the cyberattack simulation module (1500), to the interface module (1150), a triggerable attack message (M2) based on the trigger input message (M1),
d) upon receipt of the triggerable attack message (M2) by the interface module (1150 ; 1151, 1152), replying (S31) to the triggerable attack message (M2), with the interface module (1150; 1151, 1152) of the at least one user device (1000 ; 1001, 1002, 1003), the step of replying comprising selecting a defense parameter, the defense parameter being subsequently sent (S41) by the interface module (1150 ; 1151, 1152) inside a defense message (M4) to the cyberattack simulation module (1500),
e) upon receipt of the defense message (M4) by the cyberattack simulation module (1500), computing (S51), with the cyberattack simulation module (1500), a cyber-defense score of the at least one user device (1000 ; 1001, 1002, 1003) based on the defense parameter comprised in the defense message (M4), and wherein the step a) of preliminarily activating the functional module (1101, 1102) and the step b) of sending the trigger input message are both replaced by a step a3) of sending (S03 ; S031, S032, S033), from a neural network module (4000), to the cyberattack simulation module (1500), the neural network module (4000) being connected to a network (5000) and an event engine module (3000), an activation message (M0 ; M01, M02, M03), the step d) of replying (S31) to the triggerable attack message comprising a step d3) of, upon receipt of the defense message (M4) by the cyberattack simulation module (1500), informing (S61) the event engine module (3000) of the defense parameter comprised in the defense message (M4), the step d) of replying to the triggerable attack message comprises further comprising a step d4) of requesting (S62), by the neural network module (4000), a server (2000) to prepare simulation instructions based on data registered on the server (2000), the server (2000) being connected to the event engine module (3000) and to the cyberattack simulation module (1500), the step d) of replying to the triggerable attack message comprises further comprising a step d5) of sending (S63) the prepared simulation instructions from the server (2000) to a cyberattack engine module (1510) of the cyberattack simulation module (1500) and the step d) of replying to the triggerable attack message comprises further comprising a step g) of simulating (S53), with the cyberattack engine module (1510), at least one attack (M5) of the at least one user device (1000 ; 1001, 1002, 1003).

2. The computer-implemented method according to claim 1, wherein the functional module (1100) is selected among at least one standalone module (1110) and/or at least one networkable module (1120), the at least one standalone module (1110) comprising a module selected among a client email, a file explorer module, a browser module, a conversation module, an audio module, a video module and a file reader module, the at least one networkable module (1120) comprising a module selected among a client email, a contact or phone management module, a browser module, a text message module, a photo storage management module, a video storage management module and a scheduling module.

3. The computer-implemented method according to any one of claim 1 or 2, wherein the computing step e) comprises a subsequent step f) of displaying (S52) the computed cyber-defense score on a graphical interface (1800).

4. The computer-implemented method according to any one of claims 1-3, the at least one user device comprising a plurality of user devices (1000 ; 1001, 1002) called trainee devices, and wherein:
- the step a) of preliminarily activating (S01) the functional module (1101, 1102) and the step b) of sending (S11) the trigger input message are both replaced by a step a2) of sending (S02), from another user device (1004), the another user device being called trainer device (1004), an activation message (M0) to the cyberattack simulation module (1500),
- the step c) of generating with and sending from (S21) the cyberattack simulation module the triggerable attack message to the interface module is replaced by a step c2) of, upon receipt of the activation message (M0) by the cyberattack simulation module (1500), generating with and sending from (S211, S212) the cyberattack simulation module (1500), to an interface module (1151, 1152) of each trainee device (1000 ; 1001, 1002, 1003), a triggerable attack message (M21, M22) based on the activation message (M0),
- the step d) of replying (S31) to the triggerable attack message is replaced by a step d2) of, upon receipt of each triggerable attack message (M21, M22) by the interface module (1150, 1151) of each trainee device (1000 ; 1001, 1002, 1003), replying (S311, S312) to each triggerable attack message (M21, M21) by selecting, with the interface module (1151, 1152) of the trainee device (1000 ; 1001, 1002), a respective defense parameter, each respective defense parameter being subsequently sent (S411, S412) by the interface module (1151, 1152) of the trainee device (1000 ; 1001, 1002) to the cyberattack simulation module (1500) inside a respective defense message (M41, M42), and
- the step e) of computing (S51) the cyber-defense score is replaced by a step e2) of, upon receipt of the respective defense messages (M41, M42) by the cyberattack simulation module (1500), computing (S511, S512) a respective cyber-defense score of the trainee device (1000 ; 1001, 1002) based on the respective defense parameter comprised in the respective defense message (M41, M42).

5. The computer-implemented method according to any one of claims 1-4, wherein the selected defense parameter comprises either a success parameter or a failure parameter, the computing step comprising, if the selected defense parameter comprises the failure parameter, a subsequent step g) of simulating (S53 ; S531, S532), with a cyberattack engine module (1510) of the cyberattack simulation module (1500), at least one attack (M5 ; M51, M52) of the at least one user device (1000 ; 1001, 1002, 1003).

6. The computer-implemented method according to any one of claim 1 or 5, wherein the step g) of simulating (S53 ; S5301, S5302, S5303, S5304) the at least one attack (M4 ; M41, M42) of the at least one user device (1000 ; 1001, 1002, 1003) comprises the following steps:
g1) sending (S5301), to the interface module (1150 ; 1151, 1152) of the at least one user device (1000 ; 1001, 1002, 1003), a request to trigger the at least one functional module (1100 ; 1101, 1102) of the at least one user device (1000 ; 1001, 1002, 1003),
g2) receiving (S5302), from the interface module (1150) of the at least one user device (1000 ; 1001, 1002, 1003), a response command to the trigger request, the step of receiving (S5302) being carried out during a predetermined amount of time,
g3) activating (S5303) the at least one simulated attack (A) of the at least one user device (1000 ; 1002, 1004, 1006), and
g4) providing (S5304), to the at least one user device (1000 ; 1002, 1004, 1006), optional feedback information about the defense parameter and/or the response command.

7. The computer-implemented method according to any one of the preceding claims, wherein the step of sending the trigger input message, the step of generating with and sending from the cyberattack simulation module the triggerable attack message, the step of replying to the triggerable attack message and the step of computing, with the cyberattack simulation module, a cyber-defense score, are repeated iteratively and successively during a predetermined amount of time, until the cyber-defense score is larger than a predetermined maximum score and/or until the cyber-defense score is smaller than a predetermined minimum score.

8. The computer-implemented method according to any one of the preceding claims, wherein the triggerable attack message (M2 ; M21, M22) is generated by the cyberattack simulation module (1500) based on a story parameter (STP), the story parameter being registered in a memory (1550) of the cyberattack simulation module (1500) or in at least one story database (2130 ; 2131, 2132, 2133) of a story server (2100) connected to the cyberattack simulation module (1500), the story server (2100) comprising an event database (2110), a scene database (2120) and the story database (2130).

9. The computer-implemented method according to claim 8 when claim 8 depends on claim 4, wherein the trainer device (1004) is connected to a trainer module (1600), the trainer module (1600) comprising a simulation module (1610), the simulation module (1610) comprising an event launch module (1621) connected to the event database (2110), a scene launch module (1622) connected to the scene database (2120) and a story launch module (1623) connected to the story database (2130), the generation of the story parameter (STP) being based on information stored in the event database (2110), in the scene database (2120) and/or in the story database (2130), the event launch module (1621) being configured to control the generation of the story parameter (STP) based on the information in the event database (2110), the scene launch module (1622) being configured to control the generation of the story parameter (STP) based on the information in the scene database (2120), and the story launch module (1623) being configured to control the generation of the story parameter (STP) based on the information in the story database (2130).

10. The computer-implemented method according to claim 8 when claim 8 depends on claim 1, and wherein the neural network module (4000) is connected to a translator module (6000), the translator module (6000) being connected to the event engine module (3000), the translator module (6000) comprising a file format database (6100) and a source database (6200), the neural network module (4000) being configured to control the generation of the triggerable attack message (M2 ; M21, M22) by the cyberattack simulation module (1500).

11. The computer-implemented method according to claim 10, wherein the story parameter (STP) used for generating the triggerable attack message (M2 ; M21, M22) is registered in the memory (1550) of the cyberattack simulation module (1500) by the event engine module (3000), the registering of the story parameter (STP) is controlled by the neural network module (4000) based on at least one file format comprised in the file format database (6100) and on at least one source provided by the source database (6200).

12. A data processing device comprising means for carrying out the steps of the method of any of the preceding claims.

13. A computer program product comprising instructions which, when the program is executed by a computer, cause the computer to carry out the steps of any of the claims 1 to 11.

14. A computer-readable storage medium comprising instructions which, when executed by a computer, cause the computer to carry out the steps of any of the claims 1 to 11.
